(19) Europäisches Patentamt / European Patent Office / Office européen des brevets

(11) **EP 4 765 227 A1**

(12) **EUROPEAN PATENT APPLICATION**
published in accordance with Art. 153(4) EPC

(43) Date of publication:
**24.06.2026 Bulletin 2026/26**

(21) Application number: **25827057.8**

(22) Date of filing: **25.06.2025**

(51) International Patent Classification (IPC):
**H01M 4/131** (2010.01)          **H01M 4/525** (2010.01)
**H01M 4/505** (2010.01)          **H01M 10/052** (2010.01)
**H01M 4/02** (2006.01)

(52) Cooperative Patent Classification (CPC):
**H01M 4/02; H01M 4/131; H01M 4/1391;**
**H01M 4/505; H01M 4/525; H01M 10/052;**
**Y02E 60/10**

(86) International application number:
**PCT/KR2025/008913**

(87) International publication number:
**WO 2026/005487 (02.01.2026 Gazette 2026/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **28.06.2024 KR 20240085822**

(71) Applicant: **LG Energy Solution, Ltd.
Seoul 07335 (KR)**

(72) Inventors:
• **LHO, Eun Sol
Daejeon 34122 (KR)**

• **HWANG, Jin Tae
Daejeon 34122 (KR)**
• **KIM, Hyeong Il
Daejeon 34122 (KR)**
• **OH, Su Yeon
Daejeon 34122 (KR)**
• **LEE, Seok Jin
Daejeon 34122 (KR)**
• **CHO, Eun Byeol
Daejeon 34122 (KR)**

(74) Representative: **Hoffmann Eitle
Patent- und Rechtsanwälte PartmbB
Arabellastraße 30
81925 München (DE)**

(54) **POSITIVE ELECTRODE AND LITHIUM SECONDARY BATTERY COMPRISING SAME**

(57) The present invention provides a positive electrode including a positive electrode composite layer containing a positive electrode active material in a single-particle form having a cumulative volume particle size distribution satisfying Expression 1 below, wherein the positive electrode active material in a single-particle form has an average particle diameter of 4 $\mu$m to 10 $\mu$m.

[Expression 1]

$$0.6 \leq S_L / (S_R + S_L) \leq 0.8$$

In Expression 1 above, $S_R$ above is an integrated area of a region to the right of a particle size with a maximum peak in a log-scale cumulative volume particle size distribution graph of the positive electrode active material in a single-particle form included in the positive electrode, and $S_L$ above is an integrated area of a region to the left of the particle size with the maximum peak in the log-scale cumulative volume particle size distribution graph of the positive electrode active material in a single-particle form included in the positive electrode.

[FIG. 1]

**Description**

**TECHNICAL FIELD**

This application claims priority from Korean Patent Application No. 10-2024-0085822, filed on June 28, 2024, the disclosure of which is incorporated by reference herein.

The present disclosure relates to a positive electrode and a lithium secondary battery including the same. More particularly, the present invention relates to a positive electrode having improved electrode density and resistance characteristics by controlling particle distribution of a positive electrode active material therein, and a lithium secondary battery including the same.

**BACKGROUND ART**

A lithium secondary battery generally includes a positive electrode, a negative electrode, a separator, and an electrolyte, and the positive electrode and the negative electrode include active materials capable of intercalating and deintercalating lithium ions.

Recently, the electric vehicle market is booming, and particularly, there is increasing demand for an electric vehicle with a long driving range on a single charge. Accordingly, researches are being actively conducted in order to increase the energy density of a secondary battery by using a high-Ni positive electrode active material that is excellent in capacity characteristics as a positive electrode active material. The high-Ni positive electrode active material is gaining attentions as a material for developing a cell with high-energy density due to high-capacity development, but there are problems that the increased amount of Ni causes reduction in thermal stability, and increasing side reactions upon electrochemical reaction cause deterioration of lifetime characteristics and increase in gas generation.

To solve the above problems, technologies for minimizing side reactions with an electrolyte by minimizing interfaces in particles of a positive electrode active material to improve thermal stability have been developed by preparing the conventional positive electrode active material, which has been prepared in a secondary-particle form, into a single-particle form through over-sintering. However, a single-particle positive electrode active material that has been commercialized up to now has a long dispersion path for lithium ions compared to positive electrode active materials in a secondary-particle form, and has a rock-salt structure formed on a surface thereof due to the over-sintering, causing decreased output performance, so that there is a problem that it is difficult to apply alone.

In addition, since the commercialized single-particle positive electrode active material has an average particle diameter $D_{50}$ as small as 5 $\mu$m or less, BET is large, and rolled density and tap density are poor, thereby generating aggregation during a slurry process, so that there is a problem of decreased processibility.

Therefore, conventionally, it was common to use a mixture of a single particle with a small particle diameter and a secondary particle with a large particle diameter. However, in case of a positive electrode material including the mixture of the single particle with a small particle diameter and the secondary particle with a large particle diameter, as the cycle progresses, generation of microcracks in the secondary particle with a large particle diameter worsened, so that there were limits to improving long-term lifetime characteristics, and effect on suppressing gas generation was not sufficient.

**DISCLOSURE OF THE INVENTION**

**TECHNICAL PROBLEM**

The present invention is to solve the above problems, and to provide a positive electrode having excellent electrode density and resistance characteristics, despite a single-particle positive electrode active material being included, by controlling the particle size of the single-particle positive electrode active material to be within a particular range in the positive electrode, and to provide a lithium secondary battery including the same.

**TECHNICAL SOLUTION**

[1] The present invention provides a positive electrode including a positive electrode composite layer containing a positive electrode active material in a single-particle form having a cumulative volume particle size distribution satisfying Expression 1 below, wherein the positive electrode active material in a single-particle form has an average particle diameter of 4 $\mu$m to 10 $\mu$m.

$$[\text{Expression 1}] \quad 0.6 \leq S_L/(S_R+S_L) \leq 0.8$$

In Expression 1 above, $S_R$ above is an integrated area of a region to the right of a particle size with a maximum peak in a log scale cumulative volume particle size distribution graph of the positive electrode active material in a single-particle form included in the positive electrode, and $S_L$ above is an integrated area of a region to the left of the particle size with the maximum peak in the log scale cumulative volume particle size distribution graph of the positive electrode active material in a single-particle form included in the positive electrode.

[2] In [1] above, the positive electrode active material in a single-particle form may include 1 to 40 nodules.

[3] In [2] above, the nodule may have an average particle diameter of 1 $\mu$m to 10 $\mu$m.

[4] In at least one of [1] to [3] above, the positive electrode active material in a single-particle form may have an average particle diameter $D_{50}$ of 4 $\mu$m to 8 $\mu$m.

[5] In at least one of [1] to [4] above, the positive electrode active material in a single-particle form in the positive electrode may have a unimodal particle size distribution.

[6] In at least one of [1] to [5] above, the positive electrode active material in a single-particle form may include a lithium nickel-based oxide containing nickel in an amount of 60 mol% or greater among all metals excluding lithium.

[7] In at least one of [1] to [6] above, the positive electrode active material in a single-particle form may include a lithium nickel-based oxide represented by [Formula 1] below.

$$[\text{Formula 1}] \qquad Li_{1+x}[Ni_aCo_bM^1_cM^2_d]O_2$$

In [Formula 1] above, $M^1$ is one or more selected from Mn and Al, $M^2$ includes one or more selected from the group consisting of Zr, Y, B, V, W, Mg, Ce, Hf, Ta, La, Ti, Sr, Ba, F, P, and S, and $-0.2 \leq x \leq 0.2$, $0.60 \leq a < 1$, $0 < b < 0.40$, $0 < c < 0.40$, and $0 \leq d \leq 0.2$.

[8] In at least one of [1] to [7] above, the positive electrode active material in a single-particle form may further include a coating layer containing one or more element selected from the group consisting of Co, Al, W, Ti, Mg, Zr, Y, Ba, Ca, Sr, Ta, Nb, P, B, and Mo on a surface of the lithium nickel-based compound.

[9] In at least one of [1] to [8] above, the positive electrode may have an electrode density of 3.55 g/cm$^3$ or greater, preferably 3.55 g/cm$^3$ to 3.80 g/cm$^3$, and more preferably 3.60 g/cm$^3$ to 3.75 g/cm$^3$.

[10] The present invention provides a method for preparing the positive electrode according to [1] above, including preparing a positive electrode slurry containing a positive electrode active material in a single-particle form having an average particle diameter $D_{50}$ of 6 $\mu$m to 12 $\mu$m and a degree of single crystallinity of 0.3 to 0.5; applying the positive electrode slurry onto a positive electrode current collector to form a positive electrode composite layer; and performing a rolling and drying on the positive electrode composite layer.

[11] In [10] above, the positive electrode active material in a single-particle form may have a unimodal particle size distribution.

[12] In [10] or [11] above, the rolling may be performed at a linear pressure of 2 ton/cm to 8 ton/cm.

[13] The present invention provides a lithium secondary battery including the positive electrode of any one of [1] to [9] above; a negative electrode; and an electrolyte.

## Advantageous Effects

A positive electrode according to the present invention includes a positive electrode active material in a single-particle form having a particle size distribution with negative skewness in a particular range, and thus has less gas generation during charging and discharging while having a high electrode density and low resistance characteristics. Therefore, in case of applying the positive electrode according to the present invention, a lithium secondary battery that is excellent both in output characteristics and lifetime characteristics may be achieved.

Furthermore, by applying the positive electrode active material in a single-particle form having a relatively large average particle diameter, compared to a conventional one, in preparation of a positive electrode, particle breakage may be optimized during an electrode rolling, so that a desired particle size distribution may be obtained, and despite a unimodal positive electrode active material being applied, the electrode density in the same level as the case where a bimodal positive electrode active material is used may be achieved.

## BRIEF DESCRIPTION OF THE DRAWINGS

FIG. 1 is a drawing illustrating Expression 1 according to the present invention.

FIG. 2 is a drawing illustrating a particle size distribution of a positive electrode active material in a positive electrode composite layer according to each of examples and comparative examples of the present invention.

**MODE FOR CARRYING OUT THE INVENTION**

It will be understood that terms or words used in the specification and claims shall not be interpreted as the meaning defined in commonly used dictionaries, and it will be further understood that the terms or words should be interpreted as having a meaning that is consistent with their meaning in the context of the technical idea of the invention, based on the principle that an inventor may properly define the meaning of the terms or words to best explain the invention.

In the present invention, a "single-particle form" refers to a particle composed of 40 or less nodules, and refers to a concept including a single particle composed of one nodule and a similar-single particle that is a composite of 2 to 50 nodules. The "nodule" may be a sub-particle unit that constitutes a single particle and a similar-single particle, and may be a single crystal not having a crystalline grain boundary, or a polycrystal in which a grain boundary is not present in appearance when observed at 5000 times to 20000 times magnification using a scanning electron microscope.

In the present invention, a "secondary particle" refers to a particle which is formed by aggregation of a plurality of primary particles, for example, aggregation of tens to hundreds of primary particles. In particular, the secondary particle may be an aggregate of primary particles greater than 40.

In the present invention, a "particle" refers to a concept that includes any one among a single particle, a similar-single particle, a primary particle, a nodule, and a secondary particle, or all thereof.

In the present invention, the average particle diameter ($D_{mean}$) of a nodule or a primary particle refers to an arithmetic mean value calculated from the values obtained by measuring particle diameters of nodules or primary particles observed from a scanning electron microscope image.

In the present invention, in the positive electrode composite layer, the particle size distribution and average particle diameter ($D_{50}$) of the positive electrode active material in a single-particle form were measured in a method as follows.

First, the positive electrode composite layer was scraped from a positive electrode current collector to obtain positive electrode composite powder. After that, a heat treatment was performed on the obtained positive electrode composite powder at 600 °C for 10 hours to remove a binder and a conductive material, and positive electrode active material powder was obtained therefrom. After that, using a laser diffraction instrument, the particle size distribution and the average particle diameter ($D_{50}$) of the positive electrode active material powder were measured. Particularly, the powder was introduced to a laser diffraction particle size measurement instrument (e. g. Microtrac MT 3000), irradiated with ultrasonic waves of about 28 kHz and an output of 60 W, and then a cumulative volume particle size distribution graph was obtained to measure the particle size distribution and $D_{50}$. Here, the "average particle diameter $D_{50}$" refers to a particle size at 50% in the cumulative volume particle size distribution of the positive electrode active material powder.

In the present invention, the "degree of single crystallinity" refers to a ratio ($D_{mean}/D_{50}$) of the average particle diameter ($D_{mean}$) of a nodule or a primary particle to the average particle diameter ($D_{50}$) of the positive electrode active material powder.

Hereinafter, the present invention will be described in more detail.

**Positive Electrode**

First, a positive electrode according to the present invention is described.

The positive electrode according to the present invention includes a positive electrode composite layer containing a positive electrode active material in a single-particle form having a particle size distribution satisfying Expression (1) below.

$$\text{Expression (1): } 0.6 \leq S_L/(S_R+S_L) \leq 0.8$$

In Expression 1 above, $S_R$ above is an integrated area of a region to the right of a particle size with the maximum peak in a cumulative volume particle size distribution graph of the positive electrode active material in a single-particle form included in the positive electrode, and $S_L$ above is an integrated area of a region to the left of the particle size with the maximum peak in the cumulative volume particle size distribution graph of the positive electrode active material in a single-particle form included in the positive electrode.

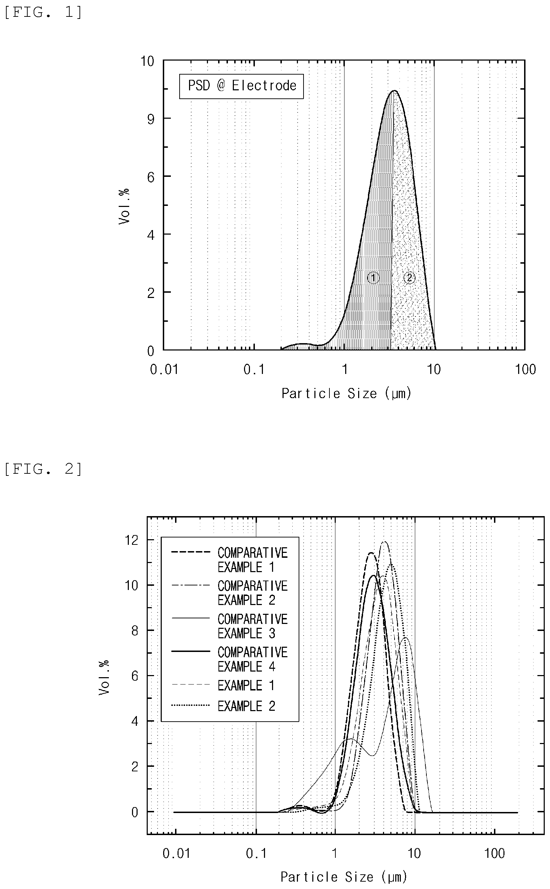

To describe Expression (1), FIG. 1 illustrates an example of the cumulative volume particle size distribution graph of positive electrode active material particles. In FIG. 1, the area of a region marked with ① is $S_L$, and the area of a region marked with ② is $S_R$.

In the positive electrode according to the present invention, when the particle size distribution of the positive electrode active material in a single-particle form satisfies the range of Expression (1) above, excellent electrode density, resistance, and lifetime characteristics are exhibited. In particular, when the particle size distribution of the positive electrode active material in a single-particle form is less than 0.6, particle breakage barely occurs during an electrode rolling process, so that effect of improving the electrode density and the resistance of the positive electrode is minimal, and when the particle size distribution is greater than 0.8, the particle breakage occurs excessively, so that there are problems that side reactions with an electrolyte solution increases and gas generation increases, and the lifetime performance deteriorates.

Meanwhile, by appropriately adjusting the average particle diameter $D_{50}$, the degree of single crystallinity, the particle size distribution, rolling conditions, etc. of the positive electrode active material in a single-particle form used in preparation of a positive electrode composite layer, the positive electrode composite layer including the positive electrode active material in a single-particle form satisfying Expression (1) above may be formed. For example, in the present invention, when the positive electrode composite layer is prepared, a positive electrode active material in a single-particle form, which has an average particle diameter $D_{50}$ of 6 $\mu$m to 12 $\mu$m, preferably 6 $\mu$m to 10 $\mu$m, and more preferably 6 $\mu$m to 8 $\mu$m, and having a degree of single crystallinity of 0.3 to 0.5, preferably 0.3 to 0.45, and more preferably 0.3 to 0.4, may be used. At this time, the degree of single crystallinity refers to a ratio ($D_{mean}/D_{50}$) of the average particle diameter ($D_{mean}$) of a nodule or a primary particle to the average particle diameter ($D_{50}$) of the positive electrode active material powder. When the average particle diameter and the degree of single crystallinity of the positive electrode active material in a single-particle form, used in the preparation of the positive electrode composite layer, fall within the above ranges respectively, particle breakage occurs in an appropriate level during the rolling, so that after the preparation of the positive electrode, the particle size distribution of the positive electrode active material in a single-particle form satisfies Expression (1) easily.

In addition, the rolling may be performed at a linear pressure of 2 ton/cm to 8 ton/cm, preferably 3 ton/cm to 5 ton/cm. When the linear pressure falls within the above ranges during the rolling, particle breakage occurs in an appropriate level during the rolling, so that after the preparation of the positive electrode, the particle size distribution of the positive electrode active material in a single-particle form satisfies Expression (1) easily.

Meanwhile, the positive electrode active material in a single-particle form may include 1 to 40 nodules, preferably 1 to 30, more preferably 1 to 25, and even more preferably 1 to 15 nodules. Since the positive electrode active material in a single particle form has a small number of nodules constituting the particle and thus has less interfaces in the particle, the area in contact with an electrolyte solution is small, so that less side reactions with the electrolyte solution occur, compared to a generally used conventional positive electrode active material in a secondary-particle form where 40 to hundreds of primary particles are aggregated, and accordingly, there are significantly less amount of gas generation. Therefore, in case of applying the positive electrode active material in a single particle form, excellent lifetime characteristics may be achieved.

Meanwhile, the nodule may have an average particle diameter of 1 $\mu$m to 10 $\mu$m, preferably of 1 $\mu$m to 8 $\mu$m, and more preferably of 1 $\mu$m to 5 $\mu$m. When the average particle diameter of the nodule falls within the above ranges, increase in resistance may be more effectively suppressed.

Meanwhile, in the present invention, the positive electrode active material in a single-particle form has an average particle diameter $D_{50}$ of 4 $\mu$m to 10 $\mu$m, preferably of 4 $\mu$m to 8 $\mu$m, and more preferably of 4 $\mu$m to 6 $\mu$m. At this time, the average particle diameter $D_{50}$ of the positive electrode active material in a single-particle form is an average particle diameter of the positive electrode active material in a single-particle form after preparation of a positive electrode, that is, after a rolling. Since the particle breakage of the positive electrode active material in a single-particle form occurs due to the rolling in a process of preparing the positive electrode, the average particle diameter of the positive electrode active material in a single-particle form, measured after the preparation of the positive electrode, is smaller than the average particle diameter of the positive electrode active material in a single-particle form which is added to a positive electrode slurry before the rolling. When the average particle diameter of the positive electrode active material in a single-particle form falls within the above range in the positive electrode, rolled density may be excellent, so that excellent effect may be achieved in terms of high-temperature lifetime, suppression of gas generation, and resistance. Particularly, when the average particle diameter of the positive electrode active material in a single-particle form is less than 4 $\mu$m, effect of suppressing the gas generation is minimal, and when greater than 10 $\mu$m, the resistance in the positive electrode active material increases, causing a problem that output characteristics are reduced.

Meanwhile, the positive electrode active material in a single-particle form may have a unimodal particle size distribution. This is because when the conditions of Expression (1) above are satisfied, excellent electrode density may be achieved even in case of having the unimodal particle size distribution.

The positive electrode active material in a single-particle form may include a lithium nickel-based oxide containing nickel in an amount of 60 mol% or greater among all metals excluding lithium, and for example, may include a lithium nickel-based oxide represented by [Formula 1] below.

[Formula 1]          $Li_{1+x}[Ni_aCo_bM^1_cM^2_d]O_2$

In [Formula 1] above, M$^1$ may be Mn, Al, or a combination thereof, and preferably, Mn or a combination of Mn and Al.

M$^2$ above may include one or more selected from the group consisting of Zr, Y, B, V, W, Mg, Ce, Hf, Ta, La, Ti, Sr, Ba, F, P, and S. In a case where the M$^2$ element is included, structural stability of the lithium nickel-based oxide particle is improved, so that more excellent lifetime characteristics may be achieved.

1+x above refers to a molar ratio of lithium in the lithium nickel-based oxide, wherein $-0.2 \leq x \leq 0.2$, $-0.1 \leq x \leq 0.1$, or $0 \leq x \leq 0.1$ may be satisfied. When x falls within the above range, a stable layered crystal structure may be formed.

a above refers to a molar ratio of nickel among all metals excluding lithium in the lithium nickel-based oxide, wherein $0.60 \leq a < 1.0$, $0.60 \leq a \leq 0.99$, or $0.80 \leq a \leq 0.97$ may be satisfied. When a falls within the above range, high capacity may be achieved.

b above refers to a molar ratio of cobalt among all metals excluding lithium in the lithium nickel-based oxide, wherein $0 < b < 0.40$, $0.01 \leq b \leq 0.35$, or $0.01 \leq b \leq 0.20$ may be satisfied.

c above refers to a molar ratio of the M1 element among all metals excluding lithium in the lithium nickel-based oxide, wherein $0 < c < 0.40$, $0.01 \leq c \leq 0.35$, or $0.01 \leq c \leq 0.20$ may be satisfied.

d above refers to a molar ratio of the M$^2$ element among all metals excluding lithium in the lithium nickel-based oxide, wherein $0 \leq d \leq 0.20$ or $0 \leq d \leq 0.10$ may be satisfied. When the molar ratio of the M$^2$ element falls within the above range, excellent structural stability, capacity characteristics, resistance characteristics, etc. of the positive electrode active material may be exhibited.

Meanwhile, the positive electrode active material in a single-particle form may further include a coating layer on a surface of the lithium nickel-based oxide. The coating layer may include one or more elements selected from the group consisting of Co, Al, W, Ti, Mg, Zr, Y, Ba, Ca, Sr, Ta, Nb, P, B, and Mo. When the coating layer is formed on the surface of the lithium nickel-based oxide, it may be possible to obtain effects of improving surface resistance characteristics, preventing aggregation in preparing a positive electrode slurry, reducing gas generation through reduction in contact area with an electrolyte solution, etc. Preferably, the coating layer may include Co, Al, Nb, Ti, B, or a combination thereof.

For the positive electrode active material in a single-particle form, a commercialized material may be purchased to use, or a mixture of a transition metal precursor and a lithium raw material may be calcined to prepare the positive electrode active material in single-particle form. In particular, the transition metal precursor and the lithium raw material may be mixed and calcined to prepare a lithium nickel-based oxide in a single-particle form, and as needed, a process of applying the lithium nickel-based oxide in a single-particle form may be performed to thereby prepare the positive electrode active material in a single-particle form.

At this time, as the transition metal precursor, nickel and cobalt, and optionally hydroxide including M$^1$ and M$^2$ elements, may be used. For the transition metal precursor, a commercialized precursor, etc. may be purchased to use, or the transition metal precursor may be prepared according to a preparation method of a precursor known to the relevant art, for example, prepared according to a coprecipitation method.

As the lithium raw material, sulfate, nitrate, acetate, carbonate, oxalate, citrate, halide, hydroxide, oxyhydroxide, or the like, containing lithium, may be used, and for example, Li$_2$CO$_3$, LiNO$_3$, LiNO$_2$, LiOH, LiOH · H$_2$O, LiH, LiF, LiCl, LiBr, LiI, CH$_3$COOLi, Li$_2$O, Li$_2$SO$_4$, CH$_3$COOLi, Li$_3$C$_6$H$_3$O$_7$, or a mixture thereof may be used.

Meanwhile, the lithium raw material and the positive electrode active material precursor may be mixed such that a molar ratio of Li : the total metal in the precursor becomes 1:1 to 1.1:1, preferably 1:1 to 1.05:1, and more preferably 1.01 : 1 to 1.03 : 1. When the mixed ratio of the lithium raw material and the metal in the positive electrode active material precursor falls within the above ranges, a layered crystal structure of the positive electrode active material may be well-developed, so that a positive electrode active material with excellent capacity characteristics and structural stability may be prepared.

Meanwhile, the calcination is performed at a temperature at which the lithium nickel-based oxide in a single-particle form may be formed. In order to form the lithium nickel-based oxide in a single-particle form, the calcination needs to be performed at a higher temperature than the temperature for preparing a conventional lithium nickel-based oxide in a secondary-particle form, and for example, when the precursor compositions are the same, the calcination needs to be performed at a temperature that is about 30 °C to 100 °C higher than the temperature for preparing the conventional lithium nickel-based oxide in a secondary-particle form. The calcination temperature for preparing the lithium nickel-based oxide in a single-particle form may vary according to the metal composition in the precursor, and for example, in case of preparing a high-Ni lithium nickel-based oxide in a single-particle form having nickel (Ni) in an amount of 80 mol% or greater, the calcination temperature may be about 700 °C to 1000 °C, preferably about 750 °C to 950 °C, and more preferably about 800 °C to 950 °C. When the calcination temperature falls within the above ranges, a lithium nickel-based oxide in a single-particle form with excellent electrochemical characteristics may be prepared. When the calcination temperature is less than 700 °C, a positive electrode active material in a secondary-particle form is prepared, and when greater than 1000 °C, the calcination occurs excessively, so that the layered crystal structure is not properly formed, deteriorating the electrochemical characteristics.

In addition, the calcination may be performed under an oxygen atmosphere for 6 to 35 hours, preferably 6 to 20 hours, and more preferably 6 to 15 hours. When the duration for calcination falls within the above ranges, the lithium nickel-based oxide in a single-particle form may be formed. If the duration for a primary calcination is too short, particle growth may be insufficient, so that a lithium nickel-based oxide in a secondary-particle form may be formed, and if too long, a rock salt phase may be generated, so that the electrochemical characteristics of an active material may deteriorate. In this specification, the oxygen atmosphere refers to an atmosphere that includes a sufficient amount of oxygen for the calcination by including an air atmosphere. In particular, it is desirable that the calcination is performed in an atmosphere where the oxygen partial pressure is higher than the air atmosphere.

Meanwhile, as needed in the calcination, an $M^1$-containing raw material and/or $M^2$-containing raw material may be mixed together and calcined. The $M^1$-containing raw material and the $m^2$-containing raw material may be acetate, carbonate, nitrate, sulfate, halide, sulfide, oxide, or the like of an $M^1$ metal or an $M^2$ metal.

Meanwhile, as needed, the lithium nickel-based oxide in a single-particle form, prepared as above, and a coating raw material are mixed and heat-treated to form a coating layer.

The coating raw material may be an oxide, a hydroxide, acetate, carbonate, nitrate, sulfate, halide, sulfide, or the like containing one or more elements selected from the group consisting of Co, Al, W, Ti, Mg, Zr, Y, Ba, Ca, Sr, Ta, Nb, P, B, and Mo.

Meanwhile, the temperature for the heat treatment may be adjusted appropriately according to the coating raw material, and may preferably be 200 °C to 800 °C or 300 °C to 700 °C.

The positive electrode composite layer may include the positive electrode active material in an amount of 93 wt% to 99 wt%, preferably 95 wt% to 98 wt%, and more preferably 95 wt% to 97 wt% on the basis of the total weight of the positive electrode composite layer. When the amount of the positive electrode active material falls within the above ranges, high energy density may be achieved. Preferably, the positive electrode active material may include the positive electrode active material in a single-particle form, but is not limited thereto.

Meanwhile, the positive electrode composite layer may further include a conductive material and a binder in addition to the positive electrode active material previously described.

The positive electrode conductive material is used to provide conductivity to the positive electrode, and any material that does not cause chemical change and conducts electrons may be used in a battery without particular limitation. Specific examples may be graphite such as natural graphite or artificial graphite; a carbon-based material including carbon black, acetylene black, ketjen black, channel black, furnace black, lamp black, thermal black, a carbon fiber, a carbon nanotube, etc.; a powder or fiber of metal including copper, nickel, aluminum, silver, etc.; a conductive whisker including zinc oxide, potassium titanate, etc.; a conductive metal oxide including titanium oxide, etc.; or a conductive polymer including a polyphenylene derivative, etc., and any one alone or a mixture of two or more thereof may be used.

The positive electrode conductive material may be included in an amount of 0.1 to 10 wt%, preferably 0.5 wt% to 8 wt%, and more preferably 1 to 5 wt% on the basis of the total weight of the positive electrode composite layer.

Next, the positive electrode binder may serve to improve binding between the positive electrode active material particles and adhesion between the positive electrode active material and the positive electrode current collector. Specific examples may include polyvinylidene fluoride (PVDF), a vinylidene fluoride-hexafluoropropylene copolymer (PVDF-co-HFP), polyvinyl alcohol, polyacrylonitrile, carboxy methyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated-EPDM, a styrenebutadiene rubber (SBR), a fluorine rubber, or various copolymers thereof, and any one alone or a mixture of two or more thereof may be used.

The positive electrode binder may be included in an amount of 0.5 wt% to 5 wt%, preferably 1 to 4 wt%, and more preferably 1 to 3 wt% on the basis of the total weight of the positive electrode composite layer.

For example, the positive electrode of the present invention may be prepared through a step of preparing a positive electrode slurry including a positive electrode active material, a step of applying the positive electrode slurry onto a positive electrode current collector to form a positive electrode composite layer, and a step of performing a rolling and drying on the positive electrode composite layer.

More particularly, the positive electrode of the present invention may be prepared in a method of mixing a positive electrode active material, a positive electrode binder and/or positive electrode conductive material in a solvent to prepare a positive electrode slurry, and applying the prepared positive electrode slurry onto a positive electrode current collector to form a positive electrode composite layer, and then performing a rolling and drying.

At this time, the positive electrode active material included in the positive electrode slurry may be a positive electrode active material in a single-particle form, for example, having an average particle diameter $D_{50}$ of 6 $\mu$m to 12 $\mu$m, preferably 6 $\mu$m to 10 $\mu$m, and more preferably 6 $\mu$m to 8 $\mu$m, and having a degree of single crystallinity of 0.3 to 0.5, preferably 0.3 to 0.45, and more preferably 0.3 to 0.4. In a case where the positive electrode is prepared using the positive electrode active material in a single-particle form satisfying the average particle diameter $D_{50}$ and the degree of single crystallinity as above, the particle size distribution of the positive electrode active material in the positive electrode composite layer after the rolling may satisfy Expression (1).

Meanwhile, as a solvent for the positive electrode slurry, solvents generally used in the relevant art may be used, and for example, dimethyl sulfoxide (DMSO), isopropyl alcohol, N-methylpyrrolidone (NMP), acetone, water, etc. may be used alone or as a mixture of two or more thereof. The amount of the solvent to be used is sufficient if it dissolves or disperses the positive electrode active material, the conductive material, and the binder in consideration of the thickness of the slurry to be applied and the manufacturing yield, and provides a viscosity that allows excellent thickness uniformity upon application for preparation of the positive electrode thereafter.

The positive electrode current collector is not particularly limited as long as it does not cause chemical change to a battery and has conductivity, and for example, stainless-steel, aluminum, nickel, titanium, calcined carbon, aluminum or stainless-steel that is surface-treated with carbon, nickel, titanium, silver, etc. may be used. In addition, the positive electrode current collector may generally have a thickness of 3 to 500 $\mu$m, and microscopic irregularities may be formed on a surface of the positive electrode current collector to improve adhesion of the positive electrode active material. For example, the positive electrode current collector may be used in various forms including a film, a sheet, a foil, a net, a porous body, a foam body, a non-woven fabric body, etc.

Meanwhile, the rolling may be performed at a linear pressure of 2 ton/cm to 8 ton/cm, preferably 3 ton/cm to 5 ton/cm, but is not limited thereto. If the linear pressure is too high during the rolling, particle breakage occurs excessively to increase side reactions with an electrolyte solution, causing increase in gas generation and reduction in lifetime characteristics, and if too low, particle breakage occurs too little, so that the particle size distribution of the positive electrode active material in a single-particle form is hard to satisfy Expression (1) after the preparation of the positive electrode, and the electrode density decreases and the energy density decreases.

The positive electrode according to the present invention may have an electrode density of 3.55 g/cm$^3$ or greater, preferably 3.55 g/cm$^3$ to 3.80 g/cm$^3$, and more preferably 3.60 g/cm$^3$ to 3.75 g/cm$^3$. When the electrode density falls within the above ranges, high energy density may be achieved.

### Lithium Secondary Battery

Hereinafter, a lithium secondary battery according to the present invention is described.

The lithium secondary battery of the present invention includes the positive electrode according to the present invention. In particular, the lithium secondary battery includes a positive electrode, a negative electrode opposed to the positive electrode, a separator disposed between the positive electrode and the negative electrode, and an electrolyte, and at this time, the positive electrode is the same as previously described.

In addition, the lithium secondary battery may optionally further include a battery case that accommodates an electrode assembly of the positive electrode, the negative electrode, and the separator, and a sealing member that seals the battery case.

In the lithium secondary battery, the negative electrode includes a negative electrode current collector and a negative electrode composite layer positioned on the negative electrode current collector.

The negative electrode current collector is not particularly limited as long as it does not cause chemical change in a battery and has high conductivity, and for example, copper, stainless steel, aluminum, nickel, titanium, calcined carbon, copper or stainless steel that is surface-treated with carbon, nickel, titanium, silver, etc., an aluminum-cadmium alloy, etc. may be used. Also, the negative electrode current collector may generally have a thickness of 3 to 500 $\mu$m, and like the positive electrode current collector, microscopic irregularities may be formed on a surface of the current collector to strengthen binding force of the negative electrode active material. For example, the current collector may be used in various forms including a film, a sheet, a foil, a net, a porous body, a foam body, a non-woven fabric body, etc.

The negative electrode composite layer includes a negative electrode binder and a negative electrode conductive material optionally, together with the negative electrode active material.

A compound capable of reversible intercalation and deintercalation of lithium may be used as the negative electrode active material. Specific examples may include a carbon-based material including artificial graphite, natural graphite, graphitized carbon fiber, amorphous carbon, etc.; a metal-based compound capable of alloying with lithium including Si, Al, Sn, Pb, Zn, Bi, In, Mg, Ga, Cd, Si alloy, Sn alloy, or Al alloy, etc.; a metal oxide capable of doping and dedoping lithium such as SiO$_\beta$ (0<$\beta$<2), SnO$_2$, vanadium oxide, and lithium vanadium oxide; or a composite containing the metal-based compound and the carbon-based material such as a Si-C composite or a Sn-C composite, and any one or a mixture of two or more thereof may be used.

In addition, as the negative electrode active material, a metal lithium thin film may also be used. In addition, for the carbon material, low-crystalline carbon, high-crystalline carbon, and the like may be all used. Representative examples of the low-crystalline carbon include soft carbon and hard carbon, and representative examples of the high-crystalline carbon include amorphous, plate-shaped, scaly, spherical, or fibrous natural graphite or artificial graphite, kish graphite, pyrolytic carbon, mesophase pitch-based carbon fiber, meso-carbon microbeads, and mesophase pitches, and high-temperature calcined carbon such as petroleum or coal tar pitch derived cokes.

The negative electrode conductive material is used to provide conductivity to an electrode, and any material that does not cause chemical change and conducts electrons may be used in a battery without particular limitation. Specific examples may be graphite such as natural graphite or artificial graphite; a carbon-based material including carbon black, acetylene black, ketjen black, channel black, furnace black, lamp black, thermal black, a carbon fiber, a carbon nanotube, etc.; a powder or fiber of metal including copper, nickel, aluminum, silver, etc.; a conductive whisker including zinc oxide, potassium titanate, etc.; a conductive metal oxide including titanium oxide, etc.; or a conductive polymer including a polyphenylene derivative, etc., and any one alone or a mixture of two or more thereof may be used. The negative electrode conductive material may be included generally in an amount of 1 to 30 wt%, preferably 1 to 20 wt%, and more preferably 1 to 10 wt% on the basis of the total weight of the negative electrode composite layer.

The negative electrode binder serves to improve binding between negative electrode active material particles and adhesion between the negative electrode active material and the negative electrode current collector. Specific examples may include polyvinylidene fluoride (PVDF), vinylidene fluoride-hexafluoropropylene copolymer (PVDF-co-HFP), polyvinylalcohol, polyacrylonitrile, carboxy methyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated-EPDM, a styrenebutadiene rubber (SBR), fluorine rubber, or various copolymers thereof, and any one alone or a mixture of two or more thereof may be used. The negative electrode binder may be included in the amount of 1 to 30 wt%, preferably 1 to 20 wt%, and more preferably 1 to 10 wt% on the basis of the total weight of the negative electrode composite layer.

As an example of the negative electrode composite layer, the negative electrode slurry including the negative electrode active material, and optionally the negative electrode binder and the negative electrode conductive material may be applied onto the negative electrode current collector and dried to prepare the negative electrode composite layer, or casting of the negative electrode slurry is performed onto a separate support, and a film separated from the support may then be laminated on the negative electrode current collector to thereby prepare the negative electrode composite layer.

Meanwhile, in the lithium secondary battery, the separator separates the negative electrode and the positive electrode, and provides a movement path of lithium ions, any separator generally used for a lithium secondary battery may be used without particular limitation, and particularly, a separator having low resistance to ion movement in an electrolyte and having excellent electrolyte solution moisture-absorbing ability is preferred. In particular, a porous polymer film, for example, a porous polymer film prepared with a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof, may be used. In addition, a general porous non-woven fabric, for example, a non-woven fabric made of glass fiber with high melting point, polyethylene terephthalate fiber, etc. may also be used. Furthermore, a coated separator including a ceramic component or a polymer material may also be used in order to secure heat resistance or mechanical strength, and may be selectively used in a single-layer or multi-layer structure.

In addition, the electrolyte used in the present invention may include an organic liquid electrolyte, an inorganic liquid electrolyte, a solid polymer electrolyte, a gel-type polymer electrolyte, a solid inorganic electrolyte, a molten-type inorganic electrolyte, etc. which may be used in preparation of a lithium secondary battery, and is not limited thereto.

In particular, the electrolyte may include an organic solvent and a lithium salt.

Any organic solvent may be used as the organic solvent, without particular limitation, as long as it may function as a medium through which ions involved in an electrochemical reaction of the battery may move. In particular, as the organic solvent, an ester-based solvent including methyl acetate, ethyl acetate, $\gamma$-butyrolactone, $\epsilon$-caprolactone, etc.; an ether-based solvent including dibutyl ether, tetrahydrofuran, etc.; a ketone-based solvent including cyclohexanone, etc.; an aromatic hydrocarbon-based solvent including benzene, fluorobenzene, etc.; a carbonate-based solvent including dimethylcarbonate (DMC), diethylcarbonate (DEC), methylethylcarbonate (MEC), ethylmethylcarbonate (EMC), ethylene carbonate (EC), propylene carbonate (PC), etc.; an alcohol-based solvent including ethylalcohol, isopropyl alcohol, etc.; nitriles including R-CN (where R is a linear, branched, or cyclic C2 to C20 hydrocarbon group, and may include a double-bond aromatic ring or an ether bond), etc.; amides including dimethylformamide, etc.; dioxanes including 1,3-dioxolane, etc.; or sulfolanes may be used. Among these, a carbonate-based solvent is preferred, and a mixture of a cyclic carbonate (for example, ethylene carbonate, propylene carbonate, or the like) having high ionic conductivity and high permittivity capable of increasing charging and discharging performance of a battery, and a low-viscosity linear carbonate-based compound (for example, ethylmethyl carbonate, dimethyl carbonate, diethyl carbonate, or the like) is more preferred.

Any compound capable of providing lithium ions that are used in a lithium secondary battery may be used for the lithium salt without particular limitation. In particular, for the lithium salt, LiPF6, LiClO$_4$, LiAsF$_6$, LiBF$_4$, LiSbF$_6$, LiAlO$_4$, LiAlCl$_4$, LiCF$_3$SO$_3$, LiC$_4$F$_9$SO$_3$, LiN(C$_2$F$_5$SO$_3$)$_2$, LiN(C$_2$F$_5$SO$_2$)$_2$, LiN(CF$_3$SO$_2$)$_2$, LiCl, LiI, LiB(C$_2$O$_4$)$_2$, or the like may be used. The lithium salt may be used in a concentration range of 0.1 to 5.0 M and preferably of 0.1 to 3.0 M. When the concentration of lithium salt falls within the above ranges, the electrolyte may have appropriate conductivity and viscosity, and therefore, excellent performance of the electrolyte may be exhibited, and lithium ions may move effectively.

In addition to the above-described components, an additive may further be included in the electrolyte for the purpose of improving lifetime characteristics of a battery, suppressing reduction of battery capacity, improving a discharge capacity of the battery, etc. For example, as the additive, a halo-alkylene carbonate-based compound such as difluoroethylene carbonate, pyridine, triethylphosphite, triethanolamine, cyclic ether, ethylenediamine, n-glyme, hexamethylphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, aluminum trichloride, or the like may be used alone, or as a mixture thereof, but an example is not limited thereto. The additive may be included in an amount of 0.1 to 10 wt%, and preferably 0.1 to 5 wt% on the basis of the total weight of the electrolyte.

Since the lithium secondary battery including the positive electrode according to the present invention, as previously described, stably exhibits excellent discharge capacity, output characteristics, and capacity retention rate, it is useful in the field of mobile devices, such as a mobile phone, a laptop computer, and a digital camera, and in the field of electric vehicles such as a hybrid electric vehicle (HEV).

According to another embodiment of the present invention, a battery module including the lithium secondary battery as a unit cell, or a battery pack are provided.

The battery module or battery pack may be used as a power source for any one or more medium and large-sized devices among a power tool; an electric vehicle including an electric vehicle (EV), a hybrid electric vehicle, and a plug-in hybrid electric vehicle (PHEV); or a system for power storage.

Hereinafter, examples of the present invention will be described in detail so that those skilled in the art to which the present invention pertains may easily carry out the present invention. However, the present invention may be implemented in several different forms, and is not limited to the examples to be described herein.

**Example 1**

Positive electrode active material powder in a single-particle form ($LiNi_{0.8}Co_{0.1}Mn_{0.1}O_2$), having an average particle diameter of 6.5 $\mu$m, a degree of single crystallinity of 0.33, and a $S_L/(S_R+S_L)$ value of 0.5 measured using a log-scale cumulative volume particle size distribution graph, was prepared. The positive electrode active material powder, a conductive material (Super P), and a PVdF binder were mixed in an N-methylpyrrolidone in a weight ratio of 96:2:2 to prepare a positive electrode slurry. The positive electrode slurry was applied onto an aluminum current collector and dried, and then rolling was performed at a linear pressure of 3.5 ton/cm to form a positive electrode composite layer, and a positive electrode was prepared therefrom.

**Example 2**

A positive electrode was prepared in the same method as that of Example 1, except that positive electrode active material powder in a single-particle form ($LiNi_{0.8}Co_{0.1}Mn_{0.1}O_2$) having an average particle diameter of 7.2 $\mu$m, a degree of single crystallinity of 0.36, and a $S_L/(S_R+S_L)$ value of 0.5 measured using a log-scale cumulative volume particle size distribution graph was used as the positive electrode active material powder.

**Comparative Example 1**

A positive electrode was prepared in the same method as that of Example 1, except that positive electrode active material powder in a single-particle form ($LiNi_{0.8}Co_{0.1}Mn_{0.1}O_2$) having an average particle diameter of 4.0 $\mu$m, a degree of single crystallinity of 0.50, and a $S_L/(S_R+S_L)$ value of 0.5 measured using a log-scale cumulative volume particle size distribution graph was used as the positive electrode active material powder.

**Comparative Example 2**

A positive electrode was prepared in the same method as that of Example 1, except that positive electrode active material powder in a single-particle form ($LiNi_{0.8}Co_{0.1}Mn_{0.1}O_2$) having an average particle diameter of 7.0 $\mu$m, a degree of single crystallinity of 0.61, and a $S_L/(S_R+S_L)$ value of 0.50 measured using a log-scale cumulative volume particle size distribution graph was used as the positive electrode active material powder.

**Comparative Example 3**

A positive electrode was prepared in the same method as that of Example 1, except that positive electrode active material powder in a secondary-particle form ($LiNi_{0.8}Co_{0.1}Mn_{0.1}O_2$) having an average particle diameter of 9 $\mu$m, a degree of single crystallinity of 0.04, and a $S_L/(S_R+S_L)$ value of 0.5 measured using a log-scale cumulative volume particle size distribution graph was used as the positive electrode active material powder.

**Comparative Example 4**

A positive electrode was prepared in the same method as that of Example 1, except that positive electrode active material powder in a single-particle form ($LiNi_{0.8}Co_{0.1}Mn_{0.1}O_2$) having an average particle diameter of 4 μm, a degree of single crystallinity of 0.38, and a $S_L/(S_R+S_L)$ value of 0.5 measured using a log-scale cumulative volume particle size distribution graph was used as the positive electrode active material powder.

**Experimental Example 1**

The cumulative volume particle size distribution and rolled density of the positive electrode active material prepared according to each of Examples 1 and 2 and Comparative Examples 1 to 4 were measured in a method as follows. Using the measured cumulative particle size distribution graph (log scale), the $S_L/(S_R+S_L)$ value was calculated.
The measurement results were shown in Table 1 below and FIG. 2.

(1) Measurement Method for Particle Size Distribution

A positive electrode composite layer was scraped from a positive electrode current collector of the positive electrode prepared according to each of the examples and comparative examples to obtain positive electrode composite powder. After that, a heat treatment was performed on the obtained positive electrode composite powder at 600 °C for 10 hours to remove a binder and a conductive material, and positive electrode active material powder was obtained therefrom. After that, the positive electrode active material powder was introduced to a laser diffraction particle size measurement instrument (e. g. Microtrac MT 3000), and irradiated with about 28 kHz ultrasonic waves and an output of 60 w to obtain a log-scale cumulative volume particle size distribution graph. After that, by using the measured cumulative particle size distribution graph (log scale), the $D_{50}$ and $S_L/(S_R+S_L)$ values of the positive electrode active material were measured.

(2) Electrode Density ($g/cm^3$)

The positive electrode prepared according to each of the examples and comparative examples was punched into a 14-pi circle, and then the weight $W_t$ and the thickness $T_t$ of the punched positive electrode were measured. After that, from the punched positive electrode, the weight $W_c$ and the thickness $T_c$ of the positive electrode current collector were measured, and then $W_c$ was subtracted from $W_t$ to calculate the weight W of the positive electrode composite layer, and $T_c$ was subtracted from $T_t$ to calculate the thickness T of the positive electrode composite layer. After that, by using the weight W and the thickness T, the electrode density was calculated.

[Table 1]

| | Degree of single crystallini ty | $S_L/(S_R+S_L)$ of positive electrode active material after positive electrode is prepared | $D_{50}$ (μm) of positive electrode active material after positive electrode is prepared | Electrode density ($g/cm^3$) |
|---|---|---|---|---|
| Example 1 | 0.33 | 0.66 | 4.805 | 3.60 |
| Example 2 | 0.36 | 0.70 | 4.835 | 3.69 |
| Comparative Example 1 | 0.50 | 0.56 | 2.9 | 3.40 |
| Comparative Example 2 | 0.61 | 0.58 | 4.18 | 3.51 |
| Comparative Example 3 | 0.04 | 0.81 | 6.16 | 3.45 |
| Comparative Example 4 | 0.38 | 0.61 | 3.85 | 3.43 |

**Experimental Example 2**

A polyethylene separator was disposed between the positive electrode, prepared according to each of Examples 1 and 2 and Comparative Examples 1 to 4 and a lithium metal electrode to prepare an electrode assembly, and then the electrode assembly was placed in a battery case and an electrolyte solution was injected thereto to prepare a half cell. At this time, LiPF6 with a concentration of 1 M was dissolved in a mixed organic solvent where ethylene carbonate: dimethyl carbonate: diethyl carbonate were mixed in a volume ratio of 3:4:3 to prepare the electrolyte.

The initial resistance and the amount of gas generation of the above lithium secondary battery were measured in the following method. The measurement results were listed in [Table 2] below.

(1) Initial resistance ($\Omega$): a formation process was performed on each of the half cells, prepared as above, and then using a PNE-0506 charging and discharging regulator (manufacturer: PNE Solution Co., Ltd.), the half cell was charged with 0.33 C to 4.3 V in a constant current-constant voltage condition at 25 °C, and discharged with 0.33 C to SOC 50%, and then the voltage drop, occurring in a state where discharge pulse was applied with 1.0 C constant current for 10 seconds, was measured to obtain the initial resistance value.

(2) Amount of gas generation ($\mu$l): two half cells of each, prepared as above, were charged with 0.1 C to 4.3 V in a constant current-constant voltage mode (charge cut-off condition:1/20C). After that, the charged cells were disassembled to obtain two pieces of positive electrode and two pieces of separator, then the positive electrode and the separator were alternately laminated on a lower plate of a coin cell, injected with an electrolyte, and then reassembled into a coin cell. After that, the coin cell was stored at 70 °C for 4 weeks, and then the amount of gas generated was measured using a gas chromatograph-mass spectrometer (GC-MS)

[Table 2]

|  | Initial resistance ($\Omega$) | Amount of gas generation ($\mu$l) |
|---|---|---|
| Example 1 | 1. 48 | 52 |
| Example 2 | 1.51 | 48 |
| Comparative Example 1 | 1.48 | 79 |
| Comparative Example 2 | 1.72 | 49 |
| Comparative Example 3 | 1. 45 | 126 |
| Comparative Example 4 | 1. 43 | 91 |

As shown in Table 2 above, in case of the batteries applied with the positive electrodes according to Examples 1 and 2, the initial resistance and gas generation characteristics were all excellent. Compared to this, in case of Comparative Examples 1 to 3 where the $S_L/(S_R+S_L)$ values of the positive electrode active materials after the preparation of the positive electrodes fall out of the range of the present invention, it can be seen that either one of the initial resistance or the gas generation characteristics was poor. In addition, even though the $S_L/(S_R+S_L)$ values of the positive electrode active materials, after the preparation of the positive electrodes, fall within the range of the present invention, in case of Comparative Example 4 where the average particle diameter of the positive electrode active material falls out of the range of the present invention, it can be seen that the resistance characteristics were excellent, but the gas generation characteristics were poor.

**Claims**

**1.** A positive electrode comprising:

a positive electrode composite layer comprising a positive electrode active material in a single-particle form having a cumulative volume particle size distribution satisfying Expression 1 below,
wherein the positive electrode active material in a single-particle form has an average particle diameter of 4 $\mu$m to 10 $\mu$m.

$$[\text{Expression 1}]$$

$$0.6 \leq S_L/(S_R+S_L) \leq 0.8$$

where, in Expression 1 above, $S_R$ above is an integrated area of a region to the right of a particle size with a maximum peak in a log-scale cumulative volume particle size distribution graph of the positive electrode active material in a single-particle form included in the positive electrode, and $S_L$ above is an integrated area of a region to the left of the particle size with the maximum peak in the log-scale cumulative volume particle size distribution graph of the positive electrode active material in a single-particle form included in the positive electrode.

2. The positive electrode of claim 1, wherein the positive electrode active material in a single-particle form comprises 1 to 40 nodules.

3. The positive electrode of claim 2, wherein the nodule has an average particle diameter of 1 $\mu$m to 10 $\mu$m.

4. The positive electrode of claim 1, wherein the positive electrode active material in a single-particle form has an average particle diameter of 4 $\mu$m to 8 $\mu$m.

5. The positive electrode of claim 1, wherein the positive electrode active material in a single-particle form has a unimodal particle size distribution.

6. The positive electrode of claim 1, wherein the positive electrode active material in a single-particle form comprises a lithium nickel-based oxide comprising nickel in an amount of 60 mol% or greater among all metals excluding lithium.

7. The positive electrode of claim 1, wherein the positive electrode active material in a single-particle form comprises a lithium nickel-based oxide represented by [Formula 1] below.

$$[\text{Formula 1}] \qquad Li_{1+x}[Ni_aCo_bM^1_cM^2_d]O_2$$

where, in [Formula 1] above, $M^1$ is one or more selected from Mn and Al, $M^2$ comprises one or more selected from the group consisting of Zr, Y, B, V, W, Mg, Ce, Hf, Ta, La, Ti, Sr, Ba, F, P, and S, and $-0.2 \leq x \leq 0.2$, $0.60 \leq a < 1$, $0 < b < 0.40$, $0 < c < 0.40$, and $0 \leq d \leq 0.2$.

8. The positive electrode of claim 7, wherein the positive electrode active material in a single-particle form further comprises a coating layer comprising one or more elements selected from the group consisting of Co, Al, W, Ti, Mg, Zr, Y, Ba, Ca, Sr, Ta, Nb, P, B, and Mo on a surface of the lithium nickel-based compound.

9. The positive electrode of claim 1, wherein the positive electrode has an electrode density of 3.55 g/cm$^3$ or greater.

10. A method for preparing the positive electrode according to claim 1, comprising:

preparing a positive electrode slurry comprising a positive electrode active material in a single-particle form having an average particle diameter $D_{50}$ of 6 $\mu$m to 12 $\mu$m, and having a degree of single crystallinity of 0.3 to 0.5;
applying the positive electrode slurry onto a positive electrode current collector to form a positive electrode composite layer; and
performing a rolling and drying on the positive electrode composite layer.

11. The method for preparing the positive electrode of claim 10, wherein the positive electrode active material in a single-particle form has a unimodal particle size distribution.

12. The method for preparing the positive electrode of claim 10, wherein the rolling is performed at a linear pressure of 2 ton/cm to 8 ton/cm.

13. A lithium secondary battery comprising:

the positive electrode of any one of claim 1 to claim 9;
a negative electrode; and
an electrolyte.

[FIG. 1]

[FIG. 2]

## INTERNATIONAL SEARCH REPORT

| International application No. |
| --- |
| **PCT/KR2025/008913** |

| A. | CLASSIFICATION OF SUBJECT MATTER |
| --- | --- |

**H01M 4/131**(2010.01)i; **H01M 4/525**(2010.01)i; **H01M 4/505**(2010.01)i; **H01M 10/052**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/131(2010.01); C01G 53/00(2006.01); H01M 10/052(2010.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 양극 (cathode), 부피 누적 입도 분포 (cumulative particle size distribution), 단입자 (single particle, unimodal), 평균입경 (mean particle diameter)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2024-0083059 A (LG ENERGY SOLUTION, LTD.) 11 June 2024 (2024-06-11) abstract; paragraphs [0021], [0072], [0146], [0181], [0199]-[0203], [0213]; table 1; figure 1; claims 1, 2, 3, 12 | 1-7,10-13 |
| Y | | 8,9 |
| Y | KR 10-2023-0098072 A (LG ENERGY SOLUTION, LTD.) 03 July 2023 (2023-07-03) abstract; claims 1, 10 | 8 |
| Y | CN 112635752 A (GUANGDONG MICROELECTRONICS NEW ENERGY CO., LTD.) 09 April 2021 (2021-04-09) paragraph [0004] | 9 |
| A | KR 10-2021-0028840 A (L&F CO., LTD.) 15 March 2021 (2021-03-15) abstract; claims 1, 3, 6 | 1-13 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **01 October 2025** | **02 October 2025** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2025/008913**

**C.    DOCUMENTS CONSIDERED TO BE RELEVANT**

| Category* | Citation of document, with indication, where appropriate, of the relevant passages | Relevant to claim No. |
|---|---|---|
| A | KR 10-2022-0041032 A (LG CHEM, LTD.) 31 March 2022 (2022-03-31)<br>abstract; claim 1 | 1-13 |

Form PCT/ISA/210 (second sheet) (July 2022)

**INTERNATIONAL SEARCH REPORT**
Information on patent family members

International application No.

**PCT/KR2025/008913**

| Patent document cited in search report | | | Publication date (day/month/year) | Patent family member(s) | | | Publication date (day/month/year) |
|---|---|---|---|---|---|---|---|
| KR | 10-2024-0083059 | A | 11 June 2024 | KR | 10-2808636 | B1 | 20 May 2025 |
| KR | 10-2023-0098072 | A | 03 July 2023 | CN | 118339677 | A | 12 July 2024 |
| | | | | EP | 4425611 | A1 | 04 September 2024 |
| | | | | JP | 2024-546664 | A | 26 December 2024 |
| | | | | KR | 10-2641896 | B1 | 29 February 2024 |
| | | | | US | 2023-0207799 | A1 | 29 June 2023 |
| | | | | WO | 2023-121389 | A1 | 29 June 2023 |
| CN | 112635752 | A | 09 April 2021 | CN | 112635752 | B | 17 May 2022 |
| KR | 10-2021-0028840 | A | 15 March 2021 | KR | 10-2249562 | B1 | 10 May 2021 |
| KR | 10-2022-0041032 | A | 31 March 2022 | CN | 115529825 | A | 27 December 2022 |
| | | | | CN | 115529825 | B | 08 March 2024 |
| | | | | EP | 4137460 | A1 | 22 February 2023 |
| | | | | JP | 2023-521317 | A | 24 May 2023 |
| | | | | JP | 7476344 | B2 | 30 April 2024 |
| | | | | KR | 10-2498355 | B1 | 10 February 2023 |
| | | | | US | 2023-0290942 | A1 | 14 September 2023 |
| | | | | WO | 2022-065935 | A1 | 31 March 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240085822